# EUROPÄISCHE PATENTSCHRIFT

(11) **EP 4 238 900 B1**
(45) Veröffentlichungstag und Bekanntmachung des Hinweises auf die Patenterteilung: **03.07.2024**
(21) Anmeldenummer: 22159999.6
(22) Anmeldetag: 03.03.2022
(51) Int. Cl.: B65G 1/04, B65G 57/30

(54) **BLOCKLAGERANORDNUNG**
BLOCK STORAGE ARRANGEMENT
AGENCEMENT D'ENTREPOSAGE EN BLOC

(43) Veröffentlichungstag der Anmeldung: 06.09.2023
(73) Patentinhaber: Jungheinrich Aktiengesellschaft, 22047 Hamburg (DE)
(72) Erfinder: Becker, Michael, 63512 Hainburg (DE); Morawietz, Timm, 66636 Tholey-Überroth (DE); Cremer, Dipl. Ing. (FH) Holger, 40211 Düsseldorf (DE)
(74) Vertreter: Keil & Schaafhausen Patentanwälte PartGmbB

(56) Entgegenhaltungen:
- DE-T5-112019 006 910
- DE-U1-202012 103 138
- JP-U- S5 964 825
- US-A- 3 096 891

## Beschreibung

Die vorliegende Erfindung betrifft eine Blocklageranordnung mit mindestens einem Behälteraufnahmeraum, einem Beschickungsraum in Schwerkraftrichtung unterhalb des Behälteraufnahmeraums und mindestens einem Beschickungsfahrzeug, das im Beschickungsraum in eine Position unterhalb des Behälteraufnahmeraums verfahrbar ist und eine Hubeinrichtung mit einer Steuerung aufweist.

Weiterhin betrifft die Erfindung ein Verfahren zum Betreiben einer Blocklageranordnung mit mindestens einem Behälteraufnahmeraum, einem Beschickungsraum in Schwerkraftrichtung unterhalb des Behälteraufnahmeraums und mindestens einem Beschickungsfahrzeug, das im Beschickungsraum in eine Position unterhalb des Behälteraufnahmeraums verfahrbar ist und eine Hubeinrichtung mit einer Steuerung aufweist, bei dem man Behälter mit Hilfe des Beschickungsfahrzeugs von unten in den Behälteraufnahmeraum einlagert.

Eine Blocklageranordnung, die auch als "Stapellageranordnung" bezeichnet werden kann, wird verwendet, um eine Vielzahl von Behältern aufzunehmen, die in einem oder mehreren Behälteraufnahmeräumen in Form von Stapeln angeordnet sein können. Da die Behälter in dem Stapel unmittelbar aufeinander aufstehen, ergibt sich in Schwerkraftrichtung eine hohe Packungsdichte der Behälter. Die Behälteraufnahmeräume können quer zur Schwerkraftrichtung ebenfalls relativ dicht benachbart angeordnet sein, so dass sich auch hier eine sehr gute Ausnutzung des zur Verfügung stehenden Bauraums ergibt.

Im vorliegenden Fall wird der Behälteraufnahmeraum von unten beschickt, d.h. ein Behälter wird in Schwerkraftrichtung von unten in dem Behälteraufnahmeraum eingelagert und nach unten aus dem Behälteraufnahmeraum entnommen.

Hierzu wird das Beschickungsfahrzeug verwendet, das in dem Beschickungsraum verfahrbar ist.

Da in Schwerkraftrichtung oberhalb des Behälteraufnahmeraums keine Handhabungseinrichtungen erforderlich sind, kann die Blocklageranordnung, wenn sie in einer Halle angeordnet ist, die Höhe der Halle praktisch vollständig ausnutzen.

Wenn ein Behälter in einem Behälteraufnahmeraum eingelagert wird, wird er mit Hilfe des Beschickungsfahrzeugs in eine Position unterhalb des Behälteraufnahmeraums verfahren. Die Hubeinrichtung hebt den Behälter dann an, bis er in den Behälteraufnahmeraum eintritt. Wenn sich bereits ein oder mehrere Behälter in dem Behälteraufnahmeraum befinden, dann hebt der neu einzulagernde Behälter diesen Behälter oder Behälterstapel an und schiebt ihn nach oben. Die Hubbewegung dauert so lange an, bis der neu einzulagernde Behälter an einer Halteeinrichtung vorbeibewegt worden ist und bei einem auf das Anheben folgende Absenken auf der Halteeinrichtung zur Anlage kommt und dort mit einem Abstand über dem Boden des Beschickungsraums gehalten wird.

Ein Problem kann sich dann ergeben, wenn der Behälteraufnahmeraum bereits vollständig gefüllt ist, sich also die maximal zulässige Anzahl von Behältern in dem Behälteraufnahmeraum befindet. In diesem Fall würde ein Behälter in Schwerkraftrichtung nach oben aus dem Behälteraufnahmeraum heraus bewegt werden. Wenn die Blocklageranordnung in einer Halle angeordnet ist und die Höhe der Halle ausnutzt, kann dies zu Schäden führen. So können beispielsweise die Decke der Halle, der Behälter und/oder die in dem Behälter eingelagerten Gegenstände beschädigt werden. Wenn der Behälter oben aus dem Behälteraufnahmeraum austritt, ist er nicht mehr geführt, was ebenfalls zu Störungen und zu einer verminderten Verfügbarkeit führen kann. Auch dann, wenn die Blocklageranordnung in einer Hülle angeordnet ist, was beispielsweise aus Brandschutzgründen wünschenswert sein kann, kann die Bewegung eines Behälters nach oben aus dem Behälteraufnahmeraum zu schweren Schäden führen. Eine Blocklageranordnung mit den Merkmalen des Oberbegriffs der Ansprüche 1 und 15 ist aus der DE 11 2019 006910 T5 bekannt.

Der Erfindung liegt die Aufgabe zugrunde, beim Betrieb einer Blocklageranordnung das Risiko von Schäden kleinzuhalten.

Diese Aufgabe wird bei einer Blocklageranordnung der eingangs genannten Art dadurch gelöst, dass am in Schwerkraftrichtung oberen Ende des Behälteraufnahmeraums eine Behältererfassungseinrichtung angeordnet ist, wobei die Behältererfassungseinrichtung mit der Steuerung zusammenwirkt, die eine Hubbewegung der Hubeinrichtung unterbricht, wenn die Behältererfassungseinrichtung das Vorbeilaufen eines Behälters erfasst.

Wenn also ein Behälter an der Behältererfassungseinrichtung vorbeiläuft, wird dies erfasst und ein weiteres Anheben des Behälterstapels durch die Hubeinrichtung des Beschickungsfahrzeugs wird sofort verhindert. Damit kann man verhindern, dass ein Behälter aus dem oberen Ende eines Behälteraufnahmeraums zu weit herausbewegt wird, so dass er hier keine Schäden anrichten kann. Erforderlich ist lediglich ein Zusammenwirken der Behältererfassungseinrichtung mit der Hubeinrichtung des Beschickungsfahrzeugs. Ein derartiges Zusammenwirken lässt sich aber relativ leicht einrichten, wie weiter unten gezeigt werden wird.

Vorzugsweise weist die Behältererfassungseinrichtung einen Arm auf, der quer zur Schwerkraftrichtung in den Behälteraufnahmeraum hineinragt. Der Arm wird also, wenn ein Behälter angehoben wird und den Arm berührt und mitnimmt, mit angehoben. Dies ist eine relativ einfache Möglichkeit, das Vorhandensein eines Behälters und seine Bewegung zu erfassen. Die Erfassung des Behälters erfolgt damit mechanisch.

Vorzugsweise ist die Behältererfassungseinrichtung mit einer Signalisierungseinrichtung verbunden und das Beschickungsfahrzeug weist einen mit der Steuerung verbundenen Empfänger auf, der ein Signal der Signalisierungseinrichtung zumindest dann erfasst, wenn sich das Beschickungsfahrzeug in der Position unterhalb des Beschickungsraums befindet. Es reicht aus, wenn der Empfänger das Signal empfängt, wenn sich das Beschickungsfahrzeug in der Position unterhalb des Beschickungsraums befindet, weil nur in dieser Position die Bewegung der Hubeinrichtung nach oben zu einem unerwünschten Austreten eines Behälters aus dem Behälteraufnahmeraum führen kann. Die Information, dass ein Behälter das obere Ende des Behälteraufnahmeraums erreicht hat, wird also von der Behältererfassungseinrichtung erfasst und an die Signalisierungseinrichtung weitergegeben, die dann wiederum die entsprechende Information über den Empfänger an die Steuerung des Beschickungsfahrzeugs weitergibt. Damit ist es auf einfache Weise möglich, die Information an das Beschickungsfahrzeug und an seine Steuerung zu übermitteln, auch wenn keine direkte Verbindung zwischen der Behältererfassungseinrichtung und dem Beschickungsfahrzeug besteht.

Vorzugsweise ist die Behältererfassungseinrichtung mechanisch mit der Signalisierungseinrichtung verbunden. Die Übertragung der Information von der Behältererfassungseinrichtung zu der Signalisierungseinrichtung erfolgt also mechanisch, so dass keine weiteren Hilfsenergien, wie beispielsweise elektrische Energie, erforderlich ist. Dies ergibt eine sehr zuverlässige Konstruktion.

Vorzugsweise weist die Signalisierungseinrichtung ein Signalisierungselement auf, das von der Behältererfassungseinrichtung in Schwerkraftrichtung bewegbar ist. Die Erfassungseinrichtung kann dann auf einfache Weise feststellen, ob sich das Signalisierungselement in einer Position befindet, in der die Behältererfassungseinrichtung einen Behälter noch nicht erfasst hat, oder in einer Position, wo die Behältererfassungseinrichtung von dem Behälter, der sich aus dem Behälteraufnahmeraum herausbewegt, bewegt worden ist.

Vorzugsweise ist zwischen dem Behälteraufnahmeraum und dem Beschickungsraum ein Halterahmen angeordnet und die Signalisierungseinrichtung ist in dem Halterahmen in Schwerkraftrichtung geführt. Die Signalisierungseinrichtung und vor allem das Signalisierungselement hat dann eine vorbestimmte Position senkrecht zur Schwerkraftrichtung. Lediglich die Position in Schwerkraftrichtung kann verändert werden, was es für den Empfänger einfacher macht, zwischen den unterschiedlichen Positionen des Signalisierungselements zu unterscheiden.

Vorzugsweise erfasst das Beschickungsfahrzeug, ob sich das Signalisierungselement in einem vorbestimmten Bereich in Schwerkraftrichtung befindet. Wenn sich das Signalisierungselement in seiner "tiefsten" Position befindet, ist dies ein Zeichen dafür, dass die Behältererfassungseinrichtung nicht durch einen Behälter betätigt worden und nach oben verschoben worden ist. In diesem Fall kann die Hubeinrichtung weiterarbeiten und einen Behälter anheben. Wenn sich das Signalisierungselement um einen vorbestimmten Weg nach oben in Schwerkraftrichtung bewegt hat und vom Empfänger nicht mehr erfasst werden kann, ist dies ein eindeutiges Zeichen dafür, dass die Behältererfassungseinrichtung von einem Behälter erfasst und bewegt worden ist. In diesem Fall wird die Hubeinrichtung ihre Hubbewegung unmittelbar einstellen.

Vorzugsweise ist der Empfänger als ein optischer Empfänger ausgebildet. Ein optischer Empfänger kann auf optische Weise feststellen, ob sich das Signalisierungselement in dem vorbestimmten Bereich in Schwerkraftrichtung befindet oder nicht. Dies ist eine relativ einfache Möglichkeit, um eine berührungslose Übermittlung der jeweiligen Information zu gewährleisten.

Bevorzugterweise weist das Beschickungsfahrzeug einen Lichtsender auf und das Signalisierungselement ist als Reflektor ausgebildet. Der Lichtsender kann, wenn sich das Beschickungsfahrzeug in der Position unterhalb des Beschickungsraums befindet, einen Lichtstrahl, der für das menschliche Auge sichtbar oder unsichtbar sein kann, in Richtung auf das Signalisierungselement richten. Wenn das Signalisierungselement diesen Lichtstrahl zurückreflektiert und diese Reflektion so gerichtet ist, dass sie den Empfänger erreicht, ist dies ein Zeichen dafür, dass sich das Signalisierungselement in dem vorbestimmten Bereich befindet und die Behältererfassungseinrichtung das Vorbeilaufen eines Behälters nicht erfasst hat. Wenn der Lichtstrahl nicht zum Empfänger reflektiert wird, ist dies ein Zeichen dafür, dass ein Behälter die Behältererfassungseinrichtung betätigt hat und eine Hubbewegung gestoppt werden muss.

Vorzugsweise ist an mindestens einer Ecke des Behälteraufnahmeraums ein Ständer angeordnet und die Behältererfassungseinrichtung ist am in Schwerkraftrichtung oberen Ende des Ständers angeordnet. Der Ständer kann dann gleichzeitig die Ruheposition der Behältererfassungseinrichtung definieren. Ggfs. ist am Ende des Ständers ein Anschlag vorgesehen, der die Ruheposition der Behältererfassungseinrichtung, also die Position, an der ein Behälter das obere Ende des Behälterstapelraums noch nicht erreicht hat, definiert. Mit "Ende des Ständers" ist hier ein Bereich gemeint, bis zu dem ein Behälter angehoben werden kann. Dies muss nicht unbedingt das physikalische Ende des Ständers in Schwerkraftrichtung oben sein.

Vorzugsweise läuft eine Verbindung zwischen der Behältererfassungseinrichtung und der Signalisierungseinrichtung durch den Ständer hindurch. Die Verbindung ist dann von äußeren Einflüssen geschützt. Das Risiko einer Beschädigung durch einen Behälterstapel, der beispielsweise kippt, ist klein.

Hierbei ist bevorzugt, dass die Verbindung als Seil oder Stange ausgebildet ist. Da die Verbindung im Wesentlichen auf Zug belastet wird, reicht ein Seil oder eine Stange aus.

Vorzugsweise ist der Ständer mindestens an einer Ecke mindestens eines weiteren Behälteraufnahmeraums angeordnet und die Behältererfassungseinrichtung wirkt auch mit dem weiteren Behälteraufnahmeraum zusammen. Die Behältererfassungseinrichtung kann dann für mehrere Behälteraufnahmeräume gemeinsam vorgesehen sein. Wenn sich der Ständer beispielsweise dort befindet, wo die Ecken von vier Behälteraufnahmeräumen zusammenstoßen, dann reicht eine Behältererfassungseinrichtung aus, um zu verhindern, dass aus einem der vier Behälteraufnahmeräume ein Behälter in unzulässiger Weise nach oben herausgeschoben wird.

Vorzugsweise weist der Ständer ein Profil mit mindestens einer mit einem Winkel ausgebildeten Schiene auf, die als Führung für eine im Behälteraufnahmeraum angeordneten Behälter dient, wobei die Behältererfassungseinrichtung in den Winkel der Schiene ragt. Damit wird auf einfache Weise sichergestellt, dass die Behältererfassungseinrichtung eine Bewegung des Behälters aus dem Behälteraufnahmeraum erfassen kann.

Vorzugsweise ist die Behältererfassungseinrichtung im Ständer geführt. Damit erhält die Behältererfassungseinrichtung eine definierte Position in eine Richtung senkrecht zur Schwerkraftrichtung. Man kann dadurch sicherstellen, dass sie immer so positioniert ist, dass sie ein Vorbeilaufen eines Behälters erfassen kann.

Die Aufgabe wird bei einem Verfahren der eingangs genannten Art dadurch gelöst, dass man am in Schwerkraftrichtung oberen Ende des Behälteraufnahmeraumes mit Hilfe einer Behältererfassungseinrichtung das Vorbeilaufen eines Behälters erfasst und die Hubbewegung der Hubeinrichtung unterbricht, wenn ein Behälter an der Behältererfassungseinrichtung vorbeiläuft.

Damit wird verhindert, dass ein Behälter zu weit aus dem Behälteraufnahmeraum herausbewegt wird. Damit verbundene Schäden können auf einfache Weise vermieden werden.

Die Erfindung wird im Folgenden anhand eines bevorzugten Ausführungsbeispiels in Verbindung mit der Zeichnung beschrieben. Hierin zeigen:
- Fig. 1: eine schematische Darstellung eines Teils einer Blocklageranordnung
- Fig. 2: ein oberes Ende eines Behälteraufnahmeraums mit aus dem oberen Ende herausgeschobenen Behälter,
- Fig. 3: eine Behältererfassungseinrichtung in Draufsicht,
- Fig. 4: eine schematische Schnittansicht eines Ständers am oberen Ende eines Behälteraufnahmeraums,
- Fig. 5: eine perspektivische Ansicht der Behältererfassungseinrichtung,
- Fig. 6: eine Schnittansicht eines unteren Endes eines Ständers,
- Fig. 7: die Ansicht nach Fig. 6 in einer perspektivischen Ansicht,
- Fig. 8: eine schematische Darstellung zur Erläuterung des Zusammenwirkens zwischen Signalisierungseinrichtung und Empfänger im fehlerfreien Zustand, und
- Fig. 9: die Ansicht nach Fig. 8 im Fehlerzustand.

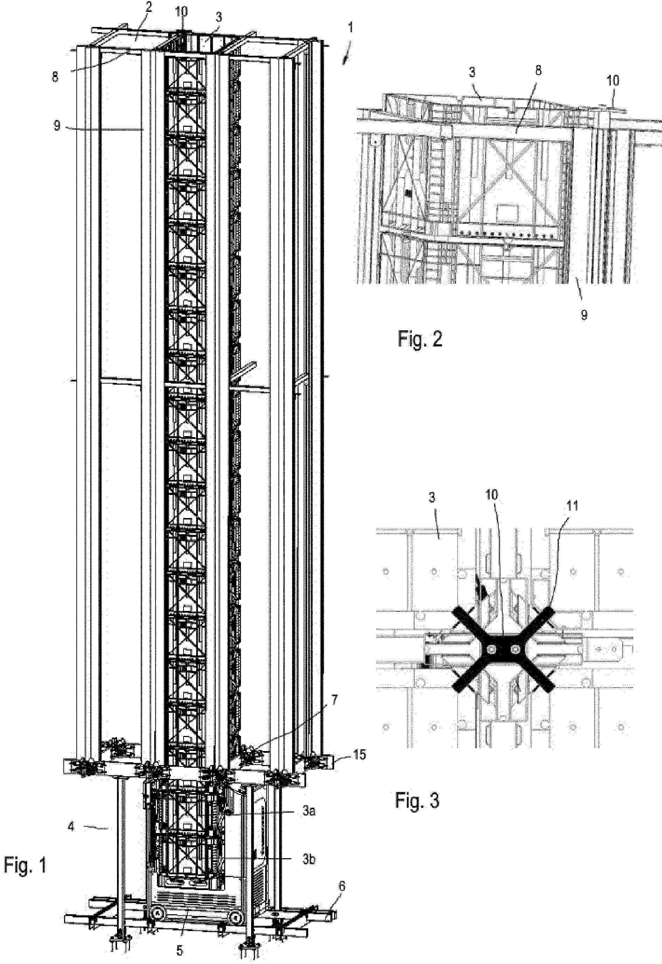

Fig. 1 zeigt stark schematisiert einen Ausschnitt einer Blocklageranordnung 1 in perspektivischer Darstellung. Die Blocklageranordnung 1 weist mehrere Behälteraufnahmeräume 2 auf, von denen in Fig. 1 drei nebeneinander dargestellt sind. Die Blocklageranordnung 1 wird allerdings in der Regel eine weitaus größere Anzahl von Behälteraufnahmeräumen 2 in einer Reihe aufweisen. Außerdem werden mehrere Reihen von Behälteraufnahmeräumen 2 nebeneinander angeordnet sein.

In einem Behälteraufnahmeraum 2 sind mehrere Behälter 3 angeordnet. Der mittlere Behälteraufnahmeraum 2 ist im vorliegenden Fall vollständig mit Behältern 3 gefüllt.

In Schwerkraftrichtung unterhalb der Behälteraufnahmeräume 2 befindet sich ein Beschickungsraum 4, in dem ein Beschickungsfahrzeug 5 verfahrbar ist. Das Beschickungsfahrzeug 5 kann beispielsweise auf Schienen 6 verfahren werden, die im Beschickungsraum 4 angeordnet sind. Es ist aber auch möglich, das Beschickungsfahrzeug 5 auf einen Fußboden des Beschickungsraums 4 verfahren zu lassen.

Die Behälteraufnahmeräume 2 der Blocklageranordnung 1 werden im vorliegenden Fall von unten mit Behältern 3 befüllt. Die Behälter 3 werden auch in Schwerkraftrichtung nach unten aus den Behälteraufnahmeräumen 2 entnommen.

Zur Einlagerung eines Behälters 3 in einen Behälteraufnahmeraum 2 wird das Beschickungsfahrzeug 5 im Beschickungsraum 4 in eine Position verfahren, in der es sich unterhalb des Beschickungsraums 2 befindet, in dem der Behälter 3 eingelagert werden soll. Das Beschickungsfahrzeug 5 trägt einen einzulagernden Behälter 3a oder, wie dargestellt, einen Stapel von zwei einzulagernden Behältern 3a, 3b. Das Beschickungsfahrzeug 5 hebt dann die Behälter 3a, 3b an, bis sie in den Beschickungsraum 2 eintreten. Die Behälter 3a, 3b werden dann an einer Haltevorrichtung 7 vorbeigeführt, die sich am unteren Ende des Behälteraufnahmeraums 2 befinden, also zwischen dem Behälteraufnahmeraum 2 und dem Beschickungsraum 4. Wenn der untere Behälter 3b des Stapels von Behältern 3a, 3b an der Haltevorrichtung 7 vorbeigeführt worden ist, wird der Stapel durch das Beschickungsfahrzeug 5 wieder abgesenkt und der unterste Behälter 3b wird von der Halteeinrichtung 7 gehalten.

Wenn sich bereits ein Stapel von Behältern 3 in dem Behälteraufnahmeraum 2 befindet, wird dieser Stapel ebenfalls mitangehoben. Dies kann dazu führen, dass der oberste Behälter 3 des Stapels, wie in Fig. 2 dargestellt, aus der Blocklageranordnung 1 herausbewegt wird. Beispielsweise wird er an Querträgern 8 vorbeibewegt, die Ständer 9 miteinander verbinden.

Wenn die Blocklageranordnung 1 in einer Halle angeordnet ist und die Höhe der Halle nahezu vollständig ausnützt, kann eine derartige Situation zu Schäden führen. So können beispielsweise die Decke der Halle, der Behälter und/oder die in dem Behälter eingelagerten Gegenstände beschädigt werden. Wenn der Behälter oben aus dem Behälteraufnahmeraum austritt, ist er nicht mehr geführt, was ebenfalls zu Störungen und zu einer verminderten Verfügbarkeit führen kann.

In vielen Fällen ist die Blocklageranordnung 1 auch von einer Hülle eingekapselt, um beispielsweise eine Atmosphäre mit vermindertem Sauerstoffgehalt erzeugen zu können. Wenn dann der oberste Behälter 3 zu weit aus der Blocklageranordnung 1 herausbewegt wird, kann er diese Hülle beschädigen.

Um das Risiko von derartigen Schäden kleinzuhalten, weist die Blocklageranordnung 1 am oberen Ende des Behälteraufnahmeraums eine Behältererfassungseinrichtung 10 auf, die teilweise in Fig. 3 dargestellt ist.

Die Behältererfassungseinrichtung 10 weist mehrere Arme 11 auf, von denen jeder quer zur Schwerkraftrichtung in einen Behälteraufnahmeraum 2 hineinragt. Wenn also ein Behälter 3 in Schwerkraftrichtung nach oben aus einem Behälteraufnahmeraum herausbewegt wird, dann kommt er in Schwerkraftrichtung von unten an einem Arm 11 der Behältererfassungseinrichtung 10 zur Anlage und nimmt die Behältererfassungseinrichtung 10 bei einer weiteren Bewegung in Schwerkraftrichtung nach oben mit.

Sobald eine derartige Bewegung der Behältererfassungseinrichtung 10 erfasst wird, muss das Beschickungsfahrzeug 5 die Hubbewegung der Behälter 3a, 3b unterbrechen. Hierzu ist die Hubeinrichtung des Beschickungsfahrzeugs 5 in nicht näher dargestellter Weise mit einer Steuerung verbunden, die die Hubbewegung der Hubeinrichtung unterbricht, wenn die Behältererfassungseinrichtung 10 das Vorbeilaufen eines Behälters 3 erfasst, indem sie beispielsweise angehoben wird.

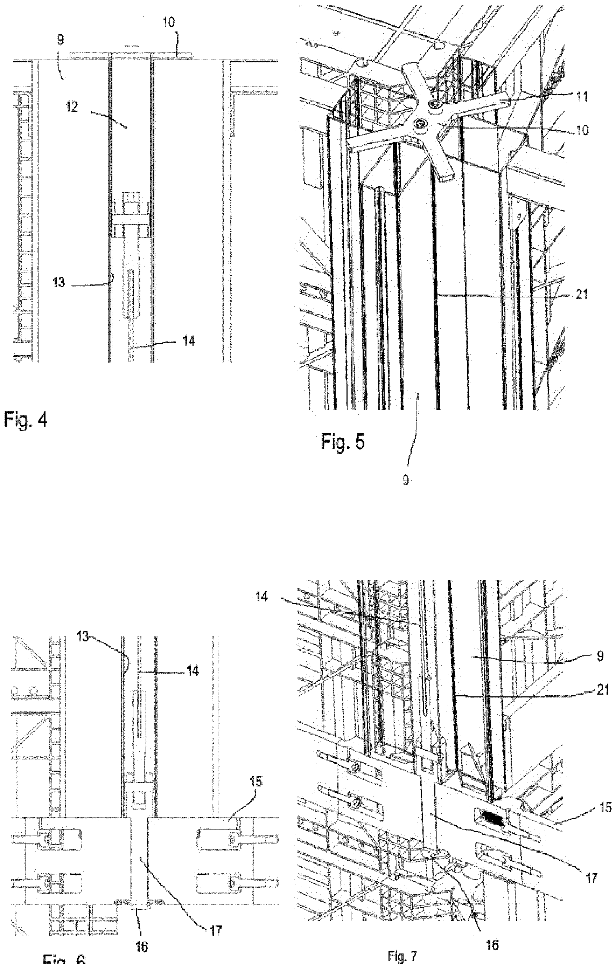

Fig. 4 zeigt eine Schnittansicht eines in Schwerkraftrichtung oberen Endes eines Ständers 9, in dem die Behältererfassungseinrichtung 10 gelagert ist. Die Behältererfassungseinrichtung 10 weist einen Fortsatz 12 auf, der in einem Hohlprofil 13 des Ständers 9 geführt ist. Das Hohlprofil 13 ist polygonförmig, beispielsweise rechteckförmig, so dass der Fortsatz 12 und damit die Behältererfassungseinrichtung 10 nur in Schwerkraftrichtung bewegt werden kann, nicht jedoch senkrecht zur Schwerkraftrichtung. Die Behältererfassungseinrichtung 10 kann auch nicht verdreht werden, so dass sichergestellt ist, dass die Arme 11 immer in einen Behälteraufnahmeraum 2 hineinragen.

Der Fortsatz 12 ist mit einem Seil 14 (es kann auch eine Stange vorgesehen sein) verbunden, wobei das Seil 14 ebenfalls durch das Hohlprofil 13 geführt ist.

Der Ständer 9 steht auf einem Halterahmen 15 auf und ist mit dem Halterahmen 15 verbunden. Das Seil 14 ist mit einem Signalisierungselement 16 verbunden, das beispielsweise als Reflektor ausgebildet sein kann. Das Signalisierungselement 16 ist an einer Führungsstange 17 angeordnet, die in dem Halterahmen 15 geführt ist. Damit kann sich auch das Signalisierungselement 16 nur in Schwerkraftrichtung bewegen, nicht jedoch quer dazu.

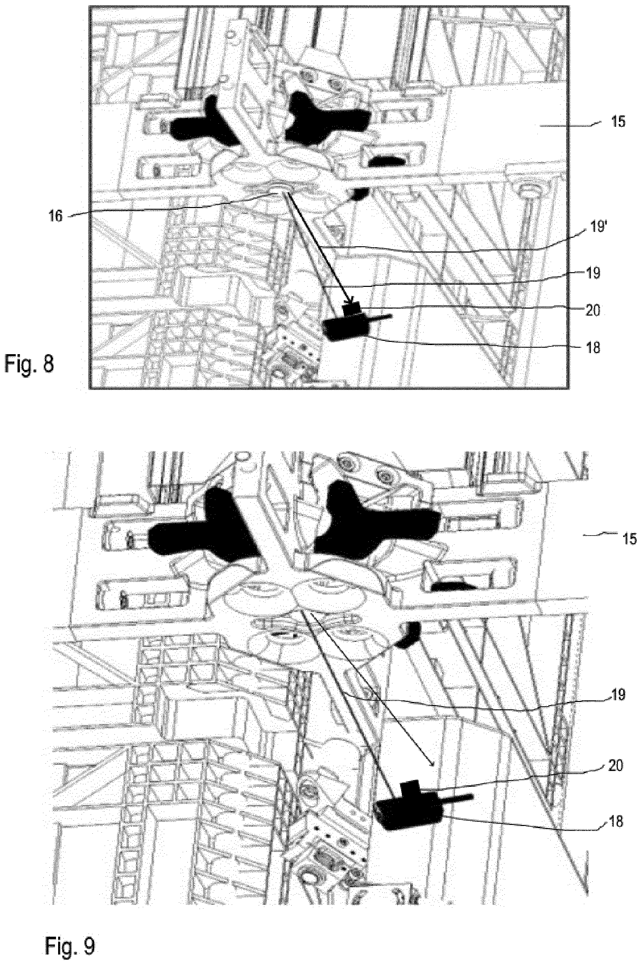

Das Beschickungsfahrzeug 5 weist einen Lichtsender 18 auf (Fig. 8 und 9), der einen Lichtstrahl 19 aussendet, der auf einen Punkt oder Bereich gerichtet ist, an dem sich im fehlerfreien Zustand, also dann, wenn noch kein Behälter 3 aus dem oberen Ende eines Behälteraufnahmeraums 2 herausbewegt worden ist, das Signalisierungselement 16 angeordnet ist. Der Lichtstrahl 19 kann für das menschliche Auge sichtbar sein. Er kann aber auch für das menschliche Auge unsichtbar sein. Es kann sich beispielsweise um infrarotes oder ultraviolettes Licht handeln.

In Fig. 8 wird das Signalisierungselement 16 vom Lichtstrahl 19 getroffen. Der Lichtstrahl 19 wird dann zum Lichtsender 18 zurückreflektiert, der einen optischen Empfänger 20 aufweist, der eine Reflektion 19' des Lichtstrahls 19 empfängt. Wenn der Empfänger 20 die Reflektion 19' des Lichtstrahls 19 empfängt, ist dies ein eindeutiges Zeichen dafür, dass es sich um einen fehlerfreien Zustand handelt, bei dem noch kein Behälter 3 aus dem in Schwerkraftrichtung oberen Ende eines Behälteraufnahmeraums 2 herausbewegt worden ist.

Wenn hingegen der Lichtstrahl 19 nicht von dem Signalisierungselement 16 reflektiert wird oder wie in Fig. 9 dargestellt, das Signalisierungselement 16 die Reflektion 19' des Lichtstrahls 19 woanders hinrichtet, der Empfänger 20 also kein entsprechendes Signal empfängt, dann befindet sich das Signalisierungselement nicht in einem vorbestimmten Höhenbereich in Schwerkraftrichtung, was ein Zeichen dafür ist, dass die Behältererfassungseinrichtung 10 angehoben worden ist. Mit dem Anheben der Behältererfassungseinrichtung 10 wird nämlich das Signalisierungselement 16 ebenfalls angehoben und verlässt damit den Bereich, der vom Lichtstrahl 19 getroffen werden kann, oder aus dem es die Reflektion 19' nicht mehr auf den Empfänger 20 richten kann.

Das Signalisierungselement 16 bildet also einen Teil einer Signalisierungseinrichtung 16, 17, die über das Seil 14 oder allgemein eine Verbindung mit der Behältererfassungseinrichtung 10 verbunden ist. Diese Verbindung, im vorliegenden Fall das Seil 14, verläuft durch den Ständer 9 und ist damit geschützt.

Es handelt sich um eine rein mechanische Verbindung, so dass für die Signalisierung des Anhebens der Behältererfassungseinrichtung 10 durch das Signalisierungselement 16 keine Hilfsenergie erforderlich ist.

Die Signalisierungseinrichtung 16, 17 und die Behältererfassungseinrichtung 10 sind beide in dem Ständer 9 geführt. Das Signalisierungselement 16 bewegt sich zwangsweise mit der Behältererfassungseinrichtung 10 mit.

Wie oben im Zusammenhang mit Fig. 3 erwähnt und wie man auch in Fig. 5 erkennen kann, ist eine Behältererfassungseinrichtung 10 ausreichend, um ein Heraustreten von Behältern aus vier Behälteraufnahmeräumen 2 zu erfassen. Dementsprechend reicht es aus, dass an mindestens einer Ecke des Behälteraufnahmeraums ein Ständer 9 angeordnet ist. Wenn dieser Ständer 9 sich dann an den vier Ecken von vier benachbarten Behälteraufnahmeräumen 2 befindet, werden alle vier Behälteraufnahmeräume 2 überwacht.

Wie man in Fig. 5 und 7 erkennen kann, weist der Ständer 9 ein Profil mit mindestens einer mit einem Winkel 21 ausgebildeten Schiene auf, die als Führung für einen im Behälteraufnahmeraum 2 angeordneten Behälter 3 dient, wobei die Behältererfassungseinrichtung 10 in den Winkel 21 der Schiene 9 ragt. Im vorliegenden Fall ragt ein Arm 11 der Behältererfassungseinrichtung 10 in den Winkel 21. Mit "Winkel" ist hier ein Zwischenraum zwischen zwei Flanken gemeint, also sozusagen eine Ecke des Behälteraufnahmeraums. Es ist durchaus möglich, dass in dem Winkel eine Schrägfläche oder eine Rundung angeordnet ist, an der die Behälter 3 entlang gleiten können.

Mit Hilfe der Behältererfassungseinrichtung 10 kann man nun auf zuverlässige Weise verhindern, dass Behälter 3 aus dem oberen Ende eines Behälteraufnahmeraums 2 herausgeschoben werden. Sobald ein Behälter 3 die Behältererfassungseinrichtung 10 kontaktiert und über ein vorbestimmtes Maß hinaus anhebt, wird das Signalisierungselement 16 der Signalisierungseinrichtung bewegt, so dass der Empfänger 20 am Beschickungsfahrzeug 5 kein entsprechendes Signal mehr erfasst und die Steuerung des Beschickungsfahrzeugs 5 die Hubbewegung der gerade angehobenen Behälter 3a, 3b unterbricht. Es reicht im Übrigen aus, wenn der Empfänger 20 das entsprechende Signal, also den reflektierten Lichtstrahl 19, nur dann erfassen kann, wenn sich das Beschickungsfahrzeug 5 tatsächlich in einer Position unterhalb eines Beschickungsraums 2 befindet. Man kann die Steuerung der Hubeinrichtung dann so ausbilden, dass sie nur dann auf das Signal (Reflektion 19' des Lichtstrahls 19) reagiert, wenn sich das Beschickungsfahrzeug tatsächlich in einer Position befindet, in der ein Behälter 3a, 3b in den Behälterstapelraum 2 eingelagert werden kann.

Wenn die Hubeinrichtung die Hubbewegung unterbricht, kann der neu einzulagernde Behälter 3a nicht mehr in den Behälteraufnahmeraum 2 eingelagert werden.

Damit wird auf einfache Weise auch automatisch sichergestellt, dass auch bei der Entnahme eines Behälters 3a aus dem Behälteraufnahmeraum 2 keine gefährliche Situation entstehen kann.

Zur Entnahme eines Behälters aus dem Behälteraufnahmeraum 2 wird das Beschickungsfahrzeug 5 wieder in eine Position unterhalb des Behälteraufnahmeraums 2 gefahren und die Hubeinrichtung wird betätigt, um den untersten Behälter des Stapels anzuheben, bis er von der Halteeinrichtung 7 freikommt und die Halteeinrichtung 7 geöffnet werden kann. Danach kann die Hubeinrichtung des Beschickungsfahrzeugs 5 abgesenkt werden und den untersten Behälter des Stapels aus ihrem Behälteraufnahmeraum 2 absenken, bis die Halteeinrichtung 7 den nächsten (oder, wenn zwei Behälter entnommen werden sollen, den übernächsten) Behälter festhält. Der oder die entnommenen Behälter können dann mit dem Beschickungsfahrzeug 5 aus der Blocklageranordnung 1 herausgefahren werden.

## Patentansprüche

1. Blocklageranordnung (1) mit mindestens einem Behälteraufnahmeraum (2), einem Beschickungsraum (4) in Schwerkraftrichtung unterhalb des Behälteraufnahmeraums (2) und mindestens einem Beschickungsfahrzeug (5), das im Beschickungsraum (4) in eine Position unterhalb des Behälteraufnahmeraums (2) verfahrbar ist und eine Hubeinrichtung mit einer Steuerung aufweist, **dadurch gekennzeichnet, dass** am in Schwerkraftrichtung oberen Ende des Behälteraufnahmeraumes (2) eine Behältererfassungseinrichtung (10) angeordnet ist, wobei die Behältererfassungseinrichtung (10) mit der Steuerung zusammenwirkt, die eine Hubbewegung der Hubeinrichtung unterbricht, wenn die Behältererfassungseinrichtung (10) das Vorbeilaufen eines Behälters (3) erfasst.

2. Blocklageranordnung nach Anspruch 1, **dadurch gekennzeichnet, dass** die Behältererfassungseinrichtung (10) einen (11) Arm aufweist, der quer zur Schwerkraftrichtung in den Behälteraufnahmeraum (2) hineinragt.

3. Blocklageranordnung nach Anspruch 1 oder 2, **dadurch gekennzeichnet, dass** die Behältererfassungseinrichtung (10) mit einer Signalisierungseinrichtung (16, 17) verbunden ist und das Beschickungsfahrzeug (5) einen mit der Steuerung verbundenen Empfänger (20) aufweist, der ein Signal der Signalisierungseinrichtung (16, 17) zumindest dann erfasst, wenn sich das Beschickungsfahrzeug (5) in der Position unterhalb des Beschickungsraums (2) befindet.

4. Blocklageranordnung nach Anspruch 3, **dadurch gekennzeichnet, dass** die Behältererfassungseinrichtung (10) mechanisch mit der Signalisierungseinrichtung (16, 17) verbunden ist.

5. Blocklageranordnung nach Anspruch 3 oder 4, **dadurch gekennzeichnet, dass** die Signalisierungseinrichtung ein Signalisierungselement (16) aufweist, das von der Behältererfassungseinrichtung (10) in Schwerkraftrichtung bewegbar ist.

6. Blocklageranordnung nach Anspruch 5, **dadurch gekennzeichnet, dass** zwischen dem Behälteraufnahmeraum (2) und dem Beschickungsraum (4) ein Halterahmen (15) angeordnet ist und die Signalisierungseinrichtung (16, 17) in dem Halterahmen (15) in Schwerkraftrichtung geführt ist.

7. Blocklageranordnung nach Anspruch 5 oder 6, **dadurch gekennzeichnet, dass** das Beschickungsfahrzeug (5) erfasst, ob sich das Signalisierungselement (16) in einem vorbestimmten Bereich in Schwerkraftrichtung befindet.

8. Blocklageranordnung nach einem der Ansprüche 5 bis 7, **dadurch gekennzeichnet, dass** der Empfänger (20) als ein optischer Empfänger ausgebildet ist.

9. Blocklageranordnung nach einem der Ansprüche 5 bis 8, **dadurch gekennzeichnet, dass** das Beschickungsfahrzeug (5) einen Lichtsender (18) aufweist und das Signalisierungselement (16) als Reflektor ausgebildet ist.

10. Blocklageranordnung nach einem der Ansprüche 1 bis 9, **dadurch gekennzeichnet, dass** an mindestens einer Ecke des Behälteraufnahmeraums (2) ein Ständer (9) angeordnet ist und die Behältererfassungseinrichtung (10) am in Schwerkraftrichtung oberen Ende des Ständers (9) angeordnet ist.

11. Blocklageranordnung nach Anspruch 10 und nach einem der Ansprüche 3 bis 9, **dadurch gekennzeichnet, dass** eine Verbindung zwischen der Behältererfassungseinrichtung (10) und der Signalisierungseinrichtung (16, 17) durch den Ständer (9) hindurch verläuft.

12. Blocklageranordnung nach Anspruch 11, **dadurch gekennzeichnet, dass** die Verbindung als Seil (14) oder Stange ausgebildet ist.

13. Blocklageranordnung nach einem der Ansprüche 10 bis 12, **dadurch gekennzeichnet, dass** der Ständer (9) mindestens an einer Ecke mindestens eines weiteren Behälteraufnahmeraums angeordnet ist und die Behältererfassungseinrichtung (10) auch mit dem weiteren Behälteraufnahmeraum zusammenwirkt.

14. Blocklageranordnung nach einem der Ansprüche 10 bis 13, **dadurch gekennzeichnet, dass** der Ständer (9) ein Profil mit mindestens einer mit einem Winkel (21) ausgebildeten Schiene aufweist, die als Führung für einen im Behälteraufnahmeraum (2) angeordneten Behälter (3) dient, wobei die Behältererfassungseinrichtung (10) in den Winkel (21) der Schiene ragt.

15. Verfahren zum Betreiben einer Blocklageranordnung mit mindestens einem Behälteraufnahmeraum (2), einem Beschickungsraum (4) in Schwerkraftrichtung unterhalb des Behälteraufnahmeraums (2) und mindestens einem Beschickungsfahrzeug (5), das im Beschickungsraum (4) in eine Position unterhalb des Behälteraufnahmeraums (2) verfahrbar ist und eine Hubeinrichtung mit einer Steuerung aufweist, bei dem man Behälter mit Hilfe des Beschickungsfahrzeugs (5) von unten in den Behälteraufnahmeraum (2) einlagert, **dadurch gekennzeichnet, dass** man am in Schwerkraftrichtung oberen Ende des Behälteraufnahmeraumes (2) mit Hilfe einer Behältererfassungseinrichtung (10) das Vorbeilaufen eines Behälters (3) erfasst und die Hubbewegung der Hubeinrichtung unterbricht, wenn ein Behälter an der Behältererfassungseinrichtung (10) vorbeiläuft.

## Claims

1. Block storage arrangement (1) having at least one container receiving space (2), a loading space (4) below, in the direction of gravity, the container receiving space (2), and at least one loading vehicle (5), which can be moved in the loading space (4) to a position below the container receiving space (2) and has a lifting device with a controller, **characterized in that** a container detecting device (10) is arranged at the upper end, in the direction of gravity, of the container receiving space (2), wherein the container detecting device (10) cooperates with the controller, which interrupts a lifting movement of the lifting device if the container detecting device (10) detects the passing of a container (3).

2. Block storage arrangement according to claim 1, **characterized in that** the container detecting device (10) has an (11) arm that projects into the container receiving space (2) transversely to the direction of gravity.

3. Block storage arrangement according to claim 1 or 2, **characterized in that** the container detecting device (10) is connected to a signaling device (16, 17), and the loading vehicle (5) has a receiver (20) connected to the controller, which receiver detects a signal from the signaling device (16, 17) at least if the loading vehicle (5) is located in the position below the loading space (2).

4. Block storage arrangement according to claim 3, **characterized in that** the container detecting device (10) is mechanically connected to the signaling device (16, 17).

5. Block storage arrangement according to claim 3 or 4, **characterized in that** the signaling device has a signaling element (16) that is movable in the direction of gravity by the container detecting device (10).

6. Block storage arrangement according to claim 5, **characterized in that** a holding frame (15) is arranged between the container receiving space (2) and the loading space (4), and the signaling device (16, 17) is guided in the holding frame (15) in the direction of gravity.

7. Block storage arrangement according to claim 5 or 6, **characterized in that** the loading vehicle (5) detects whether the signaling element (16) is located in a predetermined region in the direction of gravity.

8. Block storage arrangement according to one of claims 5 through 7, **characterized in that** the receiver (20) is formed as an optical receiver.

9. Block storage arrangement according to one of claims 5 through 8, **characterized in that** the loading vehicle (5) has a light transmitter (18), and the signaling element (16) is formed as a reflector.

10. Block storage arrangement according to one of claims 1 through 9, **characterized in that** a stand (9) is arranged at at least one corner of the container receiving space (2), and the container detecting device (10) is arranged at the upper end, in the direction of gravity, of the stand (9).

11. Block storage arrangement according to claim 10 and one of claims 3 through 9, **characterized in that** a connection between the container detecting device (10) and the signaling device (16, 17) extends through the stand (9).

12. Block storage arrangement according to claim 11, **characterized in that** the connection is formed as a cable (14) or rod.

13. Block storage arrangement according to one of claims 10 through 12, **characterized in that** the stand (9) is arranged at least at one corner of at least one further container receiving space, and the container detecting device (10) also cooperates with the further container receiving space.

14. Block storage arrangement according to one of claims 10 through 13, **characterized in that** the stand (9) has a profile with at least one rail formed with an angle (21), which rail serves as a guide for a container (3) arranged in the container receiving space (2), wherein the container detecting device (10) projects into the angle (21) of the rail.

15. Method for operating a block storage arrangement having at least one container receiving space (2), a loading space (4) below, in the direction of gravity, the container receiving space (2), and at least one loading vehicle (5), which can be moved in the loading space (4) to a position below the container receiving space (2) and has a lifting device with a controller, with which containers are stored from below in the container receiving space (2) with the aid of the loading vehicle (5), **characterized in that**, at the upper end, in the direction of gravity, of the container receiving space (2), the passing of a container (3) is detected with the aid of a container detecting device (10), and the lifting movement of the lifting device is interrupted if a container passes the container detecting device (10).

## Revendications

1. Agencement d'entreposage en blocs (1) avec au moins un espace de logement pour conteneurs (2), un espace de chargement (4) disposé en direction de la force de gravité en dessous de l'espace de logement pour conteneurs (2) et au moins un véhicule de chargement (5), qui peut être déplacé dans l'espace de chargement (4) dans une position en dessous de l'espace de logement pour conteneurs (2) et comporte un dispositif de levage avec une commande, **caractérisé en ce qu'**un système de saisie de conteneurs (10) est disposé à l'extrémité supérieure de l'espace de logement pour conteneurs (2) en direction de la force de gravité, sachant que le système de saisie de conteneurs (10) coopère avec la commande, qui interrompt un mouvement de levage du dispositif de levage, lorsque le système de saisie de conteneurs (10) saisit le passage d'un conteneur (3).

2. Agencement d'entreposage en blocs selon la revendication 1, **caractérisé en ce que** le système de saisie de conteneurs (10) comporte un bras (11), qui fait saillie dans l'espace de logement pour conteneurs (2) transversalement à la direction de la force de gravité.

3. Agencement d'entreposage en blocs selon la revendication 1 ou 2, **caractérisé en ce que** le système de saisie de conteneurs (10) est relié à un système de signalisation (16, 17) et le véhicule de chargement (5) comporte un récepteur (20) relié à la commande, qui saisit au moins ensuite un signal du système de signalisation (16, 17), lorsque le véhicule de chargement (5) se trouve dans la position en dessous de l'espace de chargement (2).

4. Agencement d'entreposage en blocs selon la revendication 3, **caractérisé en ce que** le système de saisie de conteneurs (10) est mécaniquement relié au système de signalisation (16, 17).

5. Agencement d'entreposage en blocs selon la revendication 3 ou 4, **caractérisé en ce que** le système de signalisation comporte un élément de signalisation (16), qui peut être déplacé dans la direction de la force de gravité par le système de saisie de conteneurs (10) .

6. Agencement d'entreposage en blocs selon la revendication 5, **caractérisé en ce qu'**entre l'espace de logement pour conteneurs (2) et l'espace de chargement (4) est disposé un cadre de retenue (15) et le système de signalisation (16, 17) est guidé dans le cadre de retenue (15) dans la direction de la force de gravité.

7. Agencement d'entreposage en blocs selon la revendication 5 ou 6, **caractérisé en ce que** le véhicule de chargement (5) saisit si l'élément de signalisation (16) se trouve dans une zone prédéterminée dans la direction de la force de gravité.

8. Agencement d'entreposage en blocs selon l'une quelconque des revendications 5 à 7, **caractérisé en ce que** le récepteur (20) est constitué sous la forme d'un récepteur optique.

9. Agencement d'entreposage en blocs selon l'une quelconque des revendications 5 à 8, **caractérisé en ce que** le véhicule de chargement (5) comporte un émetteur lumineux (18) et l'élément de signalisation (16) est constitué sous la forme d'un réflecteur.

10. Agencement d'entreposage en blocs selon l'une quelconque des revendications 1 à 9, **caractérisé en ce que** sur au moins un coin de l'espace de logement pour conteneurs (2) est disposé un montant (9) et le système de saisie de conteneurs (10) est disposé sur l'extrémité supérieure du montant (9) en direction de la force de gravité.

11. Agencement d'entreposage en blocs selon la revendication 10 et selon l'une quelconque des revendications 3 à 9, **caractérisé en ce qu'**une liaison passe à travers le montant (9) entre le système de saisie de conteneurs (10) et le système de signalisation (16, 17) .

12. Agencement d'entreposage en blocs selon la revendication 11, **caractérisé en ce que** la liaison est constituée sous la forme d'un câble (14) ou d'une barre.

13. Agencement d'entreposage en blocs selon l'une quelconque des revendications 10 à 12, **caractérisé en ce que** le montant (9) est disposé au moins sur un coin d'au moins un autre espace de logement pour conteneurs et le système de saisie de conteneurs (10) coopère également avec l'autre espace de logement pour conteneurs.

14. Agencement d'entreposage en blocs selon l'une quelconque des revendications 10 à 13, **caractérisé en ce que** le montant (9) comporte un profilé avec au moins un rail constitué avec un élément d'angle (21), qui sert de guidage pour un conteneur (3) disposé dans l'espace de logement pour conteneurs (2), sachant que le système de saisie de conteneurs (10) dépasse dans l'élément d'angle (21) du rail.

15. Procédé destiné à faire fonctionner un agencement d'entreposage en blocs avec au moins un espace de logement pour conteneurs (2), un véhicule de chargement (4) en direction de la force de gravité en dessous de l'espace de logement pour conteneurs (2) et au moins un véhicule de chargement (5), qui peut être déplacé dans l'espace de chargement (4) dans une position en dessous de l'espace de logement pour conteneurs (2) et comporte un dispositif de levage avec une commande, pour lequel on entrepose des conteneurs à l'aide du véhicule de chargement (5) depuis le bas dans l'espace de logement pour conteneurs (2), **caractérisé en ce que** l'on saisit le passage d'un conteneur (3) à l'extrémité supérieure de l'espace de logement pour conteneurs (2) en direction de la force de gravité à l'aide d'un système de saisie de conteneurs (10) et interrompt le mouvement de levage du dispositif de levage, lorsqu'un conteneur passe sur le système de saisie de conteneurs (10).
